(19) Europäisches Patentamt

European Patent Office

Office européen des brevets

(11) **EP 0 680 933 B1**

(12) **FASCICULE DE BREVET EUROPEEN**

(45) Date de publication et mention de la délivrance du brevet:
**12.12.2001 Bulletin 2001/50**

(51) Int Cl.⁷: **C02F 1/52**, B01D 21/00

(21) Numéro de dépôt: **95400873.6**

(22) Date de dépôt: **19.04.1995**

(54) **Procédé et installation de traitement d'un écoulement brut par décantation simple après lestage au sable fin**

Verfahren und Anlage zur Behandlung eines Rohdurchflusses durch einfaches Absetzen nach Zugabe von feinem Sand

Process and plant for the treatment of a raw fluid flow by simple settlement after introducing fine sand

(84) Etats contractants désignés:
**BE DE DK FR GB IT NL SE**

(30) Priorité: **02.05.1994 FR 9405308**

(43) Date de publication de la demande:
**08.11.1995 Bulletin 1995/45**

(73) Titulaire: **OTV Omnium de Traitements et de Valorisation**
**94417 St Maurice Cédex (FR)**

(72) Inventeurs:
• **Delsalle, Françoise**
**F-18000 Bourges (FR)**
• **le Poder, Nicolas**
**F-78700 Conflans (FR)**
• **Binot, Patrick**
**F-77600 Bussy st. Martin (FR)**

(74) Mandataire: **Rinuy, Santarelli**
**14, avenue de la Grande Armée**
**75017 Paris (FR)**

(56) Documents cités:
EP-A- 0 330 582          AT-B- 385 498
FR-A- 1 411 792          US-A- 4 139 456
US-A- 4 290 898          US-A- 4 388 195

# EP 0 680 933 B1

## Description

La présente invention concerne un procédé et une installation de séparation solide - liquide (notamment mais pas exclusivement pour la clarification ou l'épuration d'eau) par coagulation - floculation - décantation sans lamelles (c'est-à-dire décantation simple).

Cette invention s'inscrit dans la lignée des techniques de traitement d'eau par traitement physico-chimique (avec formation de flocs) puis décantation (technique dite de décantation physico-chimique en abrégé).

Les premiers décanteurs physico-chimiques simples autorisaient un fonctionnement à une vitesse au miroir (c'est le rapport du débit traité en $m^3/h$ par la surface du décanteur en $m^2$) de l'ordre du mètre par heure ; il s'agissait d'une limite supérieure imposée par la légèreté des flocs physico-chimiques et la faible vitesse de chute de ces flocs dans l'eau.

Une amélioration importante a consisté (voir le brevet FR-1.411.792 déposé le 4 Août 1964) à ajouter simultanément aux eaux à traiter des agents auxiliaires de clarification solides (par exemple du sable fin de 20 à 200 μm), un polymère et, éventuellement, d'autres produits chimiques usuels en épuration de l'eau (agents de floculation).

Les flocs qui se forment emprisonnent des grains de sable qui en augmentent la densité et donc la vitesse de chute ; l'eau chargée en flocs circule dans un réacteur de décantation s'évasant vers le haut (d'où un champ de vitesse décroissant entre l'introduction inférieure et la sortie supérieure) ; des vitesses de décantation de l'ordre de 6 à 8 m/h sont couramment obtenues dans les installations fonctionnant suivant ce principe (ces installations sont couramment désignées sous l'appellation "CYCLOFLOC").

Le sable utilisé est récupéré, par exemple par hydrocyclonage des boues sableuses, et recyclé en tête de l'installation.

Selon une autre technique (voir les documents FR-1.501.912 (déposé le 28 Septembre 1966) et FR-2.071.027 (déposé le 16 Décembre 1969)), le contact entre l'eau brute et la matière granuleuse se fait par passage de bas en haut de l'eau brute au-travers d'un lit fluidisé de cette matière granuleuse (sable, pratiquement), avec une vitesse ascendante continuellement décroissante et prélèvement dans le lit fluidisé, à des fins de régulation de concentration, d'une purge de sable chargé en boues que l'on recycle après séparation des boues. Des blocs lamellaires sont prévus pour améliorer la décantation au-dessus du lit fluidisé.

Il est à noter que l'intérêt de blocs lamellaires (à lamelles inclinées) pour le traitement d'eau a été largement exposé dans divers documents dont les documents US-4.142.970, US-4.290.898 et US-4.388.195.

Des décanteurs, dits "FLUORAPID", fonctionnant suivant le principe précité, ont permis d'atteindre des vitesses au miroir de 8 à 15 m/h.

Un autre procédé de décantation est décrit dans le brevet FR-2.552.082 déposé le 7 Octobre 1983 ; selon ce procédé qui ne fait pas intervenir de sable, on dispose entre une chambre de réaction (floculation et/ou précipitation) et une chambre de décantation lamellaire, une chambre intermédiaire d'épaississement et de décantation. La chambre de réaction, qui comprend deux chambres en communication en leurs extrémités inférieures et supérieures et une hélice à flux axial induisant une recirculation forte entre ces deux chambres, reçoit également une partie des boues recueillies au fond de la chambre intermédiaire.

L'eau chargée en floc pénètre par surverse dans la partie supérieure de la chambre intermédiaire où les flocs épaississent et se déposent pour 85 à 90 % au fond. L'eau, partiellement clarifiée, pénètre alors dans une chambre de décantation lamellaire qui parfait la décantation. Des vitesses de l'ordre de 35 m/h peuvent semble-t-il être ainsi atteintes lorsque les contraintes de qualité de l'eau traitée restent modérées.

Plus récemment, il a été proposé un procédé de traitement, visant encore à augmenter la vitesse de sortie de décantation sans sacrifier la qualité de l'eau traitée, suivant le brevet FR-2.627.704 déposé le 25 Février 1988 ; ce procédé est mis en oeuvre à l'aide d'appareils couramment dénommés "ACTIFLO".

Selon ce procédé, l'eau est injectée dans une chambre agitée de mélange et de déstabilisation des colloides, dans laquelle arrivent également le matériau granulaire (pratiquement du sable fin) et les réactifs. Le mélange d'eau, sable, réactif et flocs en formation passe ensuite dans une chambre intermédiaire d'agrégation agitée, et dans laquelle les flocs ayant germé dans la chambre de mélange grossissent sans se décanter. Le mélange d'eau et de flocs agrégés est alors envoyé dans une chambre de décantation lamellaire. Le mélange sable - boue recueilli au fond de la chambre de décantation lamellaire est hydrocycloné pour permettre le recyclage du sable vers la chambre de mélange.

Ce procédé permet d'obtenir d'excellentes qualités d'eau décantée avec des vitesses de décantation au miroir atteignant la centaine de mètres/heure.

Il apparaît clairement que les progrès apportés par la succession des techniques précitées ont consisté, pour une qualité d'eau traitée donnée, en une augmentation de la vitesse de décantation, d'abord grâce à l'emploi de flocs lestés (CYCLOFLOC), puis en combinant l'utilisation de la décantation lamellaire à un floc lesté de sable (FLUORAPID) ou de boues préalablement décantées, ensuite en améliorant la qualité de la préparation du floc, grâce à des conditions d'agitation spécifiques, toujours en combinaison à la décantation lamellaire (ACTIFLO).

On constate donc que tous les procédés récents décrits dans la littérature, y compris l'ACTIFLO, se fondent sur l'emploi de lamelles pour la décantation, dès que l'on recherche des vitesses de décantation au miroir supérieures à, par exemple, 15 m/h.

Or, ces lamelles représentent un élément non négligeable du coût des installations, tant par leur coût propre que par les contraintes d'implantation et de nettoyage qu'elles entraînent.

La présente invention vise donc à améliorer l'économie globale de la décantation en supprimant les lamelles sans pour autant sacrifier la qualité de l'eau ainsi traitée.

De façon surprenante et inattendue pour l'homme de l'art, les auteurs ont découvert qu'une préparation physico-chimique soigneuse du floc autour d'un matériau granulaire de lestage, du type de celle proposée par le brevet FR-2.627.704 déposé le 25 Février 1988, pouvait permettre d'atteindre des vitesses de décantation importantes même en l'absence de lamelles, et donc dans des conditions d'économie et de simplicité de procédé supérieures à celles déjà connues.

C'est ainsi que, comme cela sera exposé ci-dessous, le floc formé selon l'invention permet d'atteindre des vitesses au miroir pouvant atteindre plusieurs dizaines de mètres par heure tout en assurant une très bonne qualité de l'eau traitée, ce qui est notamment très supérieur aux vitesses d'au plus une dizaine de mètres par heure que permettent d'obtenir les flocs obtenus selon le procédé CYCLOFLOC.

L'invention propose un procédé de traitement d'un écoulement brut liquide chargé en particules et/ou colloïdes selon lequel :

- on fait circuler cet écoulement brut dans une première zone, dite zone de coagulation, que l'on maintient turbulente et dans laquelle on mélange à cet écoulement dans une proportion contrôlée un réactif coagulant,
- on fait circuler l'écoulement coagulé et un matériau granulaire ajouté dans une proportion contrôlée et qui est insoluble dans l'écoulement brut et plus dense que ce dernier, dans une seconde zone dite zone intermédiaire dans laquelle on maintient des turbulences propres à maintenir ce matériau granulaire en suspension tandis que des colloïdes ou particules de l'écoulement s'agrègent autour des particules de ce matériau granulaire,
- on fait circuler l'écoulement, avec sensiblement tout le matériau granulaire ajouté et les colloïdes y agrégés, dans une troisième zone, dite zone de décantation où on sépare un effluent décanté et des boues constituées du matériau granulaire et des colloïdes agrégés,
- on recueille les boues, on en extrait le matériau granulaire pour le recycler en amont et on extrait les boues sans matériau granulaire,

caractérisé en ce que le gradient de vitesse dans la zone intermédiaire est compris entre 70 et 450 $s^{-1}$, de préférence entre 150 et 250 $s^{-1}$, et en ce que la zone de décantation (21, 41, 61) dans laquelle on sépare l'effluent décanté et les boues est dépourvue de lamelles et on y fait circuler l'écoulement chargé en matériau granulaire et en matières agrégées à une vitesse de décantation d'au moins 15 m/h en moyenne.

L'écoulement brut est de préférence de l'eau à traiter.

Le matériau granulaire est ainsi introduit au plus tard dans la zone intermédiaire. Il peut être injecté dès la zone de coagulation ; il peut être injecté en plusieurs endroits (dans la zone de coagulation et dans la zone intermédiaire).

La notion de vitesse moyenne (vitesse au miroir) indiquée ci-dessus provient de ce que le régime d'écoulement de l'eau à traiter présente en pratique des fluctuations.

En d'autres termes, la décantation se fait librement sans intervention d'éléments mécaniques de subdivision rapprochés, tels que lamelles, disposés dans le trajet de l'écoulement. Des éléments de répartition tels que cloisons ou goulottes de renvoi peuvent bien entendu être prévus à des fins de régulation hydraulique, en fonction de la géométrie de la zone de décantation.

Selon des enseignements préférés de l'invention, éventuellement combinés :

- le matériau granulaire est du sable fin,
- le sable a une taille moyenne de particules comprise entre 20 et 300 µm environ, préférentiellement entre 80 et 200 µm,
- la vitesse de décantation est d'au moins 35 m/h,
- on injecte un agent floculant dans l'écoulement brut, dans une première partie de la zone intermédiaire dite zone de floculation que l'on maintient à l'état turbulent, le reste de la zone intermédiaire constituant une zone de maturation où se complète l'agrégation des particules et colloïdes,
- on injecte un complément d'agent floculant dans la zone de maturation,
- le matériau granulaire est au moins en partie injecté dans la zone de floculation,
- la zone de floculation est agitée avec un gradient de vitesse compris entre 100 $s^{-1}$ et 450 $s^{-1}$ environ, de préférence entre 200 $s^{-1}$ et 250 $s^{-1}$, plus préférentiellement de l'ordre de 200 $s^{-1}$ environ,
- le gradient de vitesse dans la zone de maturation est inférieur au gradient de vitesse dans la zone de floculation,

- le gradient de vitesse dans la zone de maturation est compris entre 70 et 300 s$^{-1}$, de préférence entre 150 et 250 s$^{-1}$, plus préférentiellement de l'ordre de 150 s$^{-1}$ à 200 s$^{-1}$ environ,
- on génère dans la zone de décantation un mouvement de cyclone ou vortex en injectant l'écoulement venant de la seconde zone d'un côté prédéterminé d'un axe vertical de symétrie de cette zone de décantation,
- la séparation entre matériau granulaire et boues est effectuée par hydrocyclonage, tamisage ou centrifugation.

Il est rappelé que le gradient de vitesse G (s$^{-1}$) s'exprime par la formule :

$$G = (P/\mu.V)^{1/2}$$

où

P(Watts) = puissance dissipée dans le liquide
μ(Pa.s) = viscosité du liquide
V(m$^3$) = volume de liquide

L'existence de seuils minima et maxima pour les valeurs de gradients de vitesse indiquées ci-dessus s'explique par le fait qu'il faut maintenir le matériau granulaire en suspension et maintenir des cinétiques rapides de mise en contact des petits flocs en formation avec les flocs déjà formés autour des particules de matériau granulaire, tout en limitant les contraintes de cisaillement à des niveaux n'induisant pas de détérioration sensible des flocs formés.

L'invention propose également une installation de traitement d'un écoulement brut liquide comportant en série :

- une première zone de coagulation munie d'une voie principale d'arrivée connectée à une source d'écoulement brut et d'une voie secondaire connectée à une source de réactif coagulant,
- des moyens d'agitation dans cette zone de coagulation,
- une seconde zone dite zone intermédiaire communiquant avec la première zone,
- de seconds moyens d'agitation dans cette zone intermédiaire,
- une voie secondaire connectée à une source de matériau granulaire insoluble dans l'écoulement brut et plus dense que ce dernier, et débouchant dans la zone de coagulation et/ou dans la zone intermédiaire,
- une troisième zone dite zone de décantation, communiquant avec la seconde zone et munie à sa partie supérieure d'une voie de sortie pour de l'effluent clarifié et à sa partie inférieure d'une voie d'évacuation de boues,
- une zone de séparation apte à récupérer le matériau granulaire dans les boues et munie d'une voie de sortie raccordée à la source de matériau granulaire,

caractérisée en ce que les moyens d'agitation de la zone intermédiaire sont reliés à des moyens de mise en oeuvre aptes à la génération par ces moyens d'agitation de gradients de vitesse compris entre 70 et 450 s$^{-1}$, de préférence compris entre 150 et 250 s$^{-1}$, et en ce que la zone de décantation est dépourvue de lamelles et est dimensionnée, compte tenu d'une valeur prédéterminée de débit d'entrée, en sorte que la vitesse au miroir y soit en moyenne d'au moins 15 m/h.

La zone de coagulation est en pratique une cuve mais il doit bien être compris que cette zone peut aussi être formée par une portion de canalisation dans laquelle le réactif coagulant est injecté, l'agitation nécessaire à la coagulation pouvant être dans ce cas engendrée par un coude de canalisation, une chute, un mélangeur statique ou tout autre dispositif permettant la mise en contact rapide du réactif coagulant avec l'ensemble de l'écoulement.

Selon des enseignements préférés de l'invention, éventuellement combinés, concernant cette installation :

- la zone de décantation est dimensionnée en sorte que la vitesse au miroir y soit d'au moins 35 m/h,
- la zone intermédiaire comporte successivement une zone de floculation dans laquelle débouchent une voie d'arrivée d'écoulement coagulé et une voie secondaire d'arrivée connectée à une source d'agent floculant, puis une zone de maturation,
- la zone de maturation comporte une seconde voie d'arrivée d'agent floculant,
- la voie secondaire d'arrivée connectée dans la source de matériau granulaire débouche dans la zone de floculation,
- les seconds moyens d'agitation dans ladite zone intermédiaire sont reliés à des moyens de mise en oeuvre aptes à la génération par ces seconds éléments d'agitation de gradients de vitesse compris, dans la zone de floculation, entre 100 s$^{-1}$ et 450 s$^{-1}$ environ, de préférence entre 200 et 250 s$^{-1}$ et dans la zone de maturation entre 70 et 300 s$^{-1}$ environ, et de préférence entre 150 et 200 s$^{-1}$.
- la zone de décantation est une chambre de section circulaire,

EP 0 680 933 B1

- la zone de maturation est une chambre disposée au centre de la zone de décantation,
- la zone de maturation i) est connectée en amont à un tube descendant, ii) contient une paroi située devant la sortie de ce tube et destinée à être franchie par sous-verse, et iii) est entourée d'une paroi tubulaire en saillie vers le haut, la voie de sortie pour l'eau clarifiée partant de la zone supérieure de la zone de décantation à l'extérieur de cette paroi tubulaire,
- la zone de maturation communique avec la zone de décantation par un tube débouchant dans la zone de décantation à l'écart d'un axe vertical de symétrie de cette dernière, en sorte de générer un cyclone ou vortex,
- la zone de décantation est circulaire et le tube y débouche tangentiellement,
- la zone de décantation comprend en une position centrale une paroi tubulaire communiquant avec une goulotte d'évacuation d'effluent clarifié ; cette paroi peut être sans fond et bordée à sa partie supérieure par une rigole communiquant avec cette goulotte ; cette paroi peut aussi avoir un fond et communiquer directement avec la goulotte, par exemple par ce fond.

Une installation réalisée selon ce principe a pu fonctionner avec des vitesses de décantation au miroir de l'ordre de 50m/h et pouvant aller jusqu'à 100 m/h et plus.

Rien ne laissait prévoir, a priori, la possibilité d'obtenir de telles vitesses de décantation sans recours à la décantation lamellaire.

Au contraire, l'évaluation par la formule de Stokes de la vitesse de chute de particules sphériques de sable (densité 2.65 T/m3) dans l'eau donne des vitesses de l'ordre de 30 m/h pour des particules de diamètre 100 $\mu$m et de 8 m/h pour des particules de diamètre 50 $\mu$m.

En outre, on a déjà insisté plus haut sur le fait que l'obtention de vitesses de décantation importantes, supérieures à, disons, 15 m/h, était systématiquement recherchée jusqu'à présent par combinaison de l'utilisation de lamelles à une préparation particulière du floc.

Il est pourtant apparu qu'une préparation soignée du floc autour du matériau granulaire a une action synergétique avec la vitesse de chute propre au matériau granulaire pur, et que l'augmentation de diamètre ainsi permise par la floculation a, sur la vitesse de chute, une action positive supérieure, grâce à la compacité du floc qu'entraîne son mode de préparation, à l'action négative de la baisse de densité du floc par rapport à celle du matériau granulaire pur.

Des objets, caractéristiques et avantages de l'invention ressortent de la description qui suit, donnée à titre d'exemple non limitatif, en regard des dessins annexés sur lesquels :

- la figure 1 est une vue schématique en élévation d'une première installation de traitement d'eau conforme à l'invention,
- la figure 2 est une vue schématique en élévation d'une seconde installation de traitement d'eau conforme à l'invention,
- la figure 3 est une vue schématique partielle de dessus de cette seconde installation,
- la figure 4 est une vue schématique en élévation d'une troisième installation de traitement d'eau conforme à l'invention, et
- la figure 5 est une vue schématique de dessus de cette troisième installation.

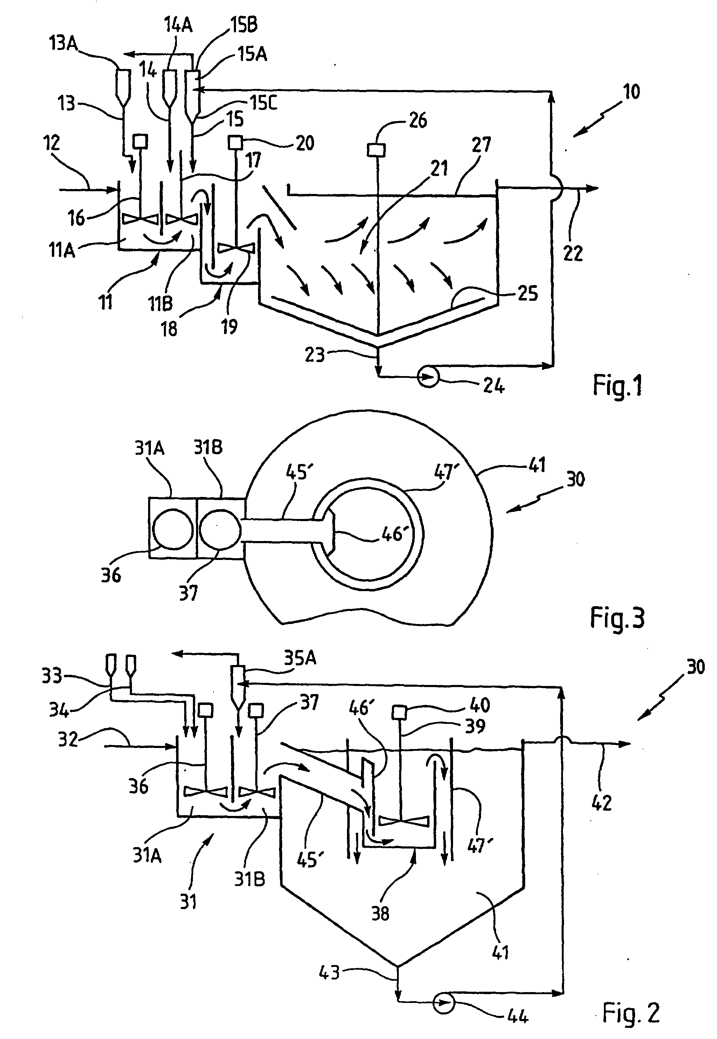

La figure 1 représente de façon schématique une installation de traitement d'eau 10 comportant en série :

- une première zone 11A dite zone de coagulation munie d'une voie principale d'arrivée 12 connectée à une source d'eau à traiter et d'une voie secondaire 13 connectée à une source de réactif coagulant 13A,
- au moins un élément d'agitation 16 dans cette zone de coagulation,
- une seconde zone dite zone intermédiaire communiquant avec la première zone, ici par sousverse (la communication peut bien sûr, en variante non représentée, se faire par surverse), et connectée par des voies secondaires 14 et 15 respectivement, à une source 14A d'agent floculant et à une source 15A de matériau granulaire insoluble dans l'eau et plus dense que l'eau,
- au moins de seconds moyens d'agitation dans cette zone intermédiaire, relié à des moyens de mise en oeuvre aptes à la génération dans l'ensemble de cette zone de gradients de vitesse de l'ordre d'au moins 70 s$^{-1}$ à 450 s$^{-1}$ environ, de préférence de l'ordre de 150 à 250 s$^{-1}$ environ,
- une troisième zone 21 dite zone de décantation, communiquant avec la seconde zone (ici par surverse) et munie à sa partie supérieure d'une voie 22 de sortie pour de l'eau clarifiée et à sa partie inférieure d'une voie 23 d'évacuation de boues, ici munie d'un élément de pompage 24,
- une zone de séparation constituant ici la source 15A de matériau granulaire, apte à récupérer le matériau granulaire dans les boues et munie d'une voie de sortie de boues 15B et d'une voie de sortie 15C de matériau granulaire. Cette séparation peut se faire par tout moyen connu approprié à disposition de l'homme de métier pour séparer le sable recyclé des boues, notamment par hydrocyclonage, tamisage ou centrifugation.

La zone ou chambre de décantation est ici de section circulaire (elle peut être prévue de toute autre forme, avec des trémies inférieures d'évacuation des boues) et est avantageusement munie d'un racleur 25 longeant le fond conique de cette zone et entraînée en rotation par un moteur 26 à une vitesse généralement lente, afin d'assurer en pratique une vitesse périphérique inférieure ou égale à 10 cm/s environ.

A la partie supérieure de la chambre de décantation est prévue une goulotte 27 de récupération de l'eau clarifiée.

Selon l'invention, la zone de décantation a une section de passage massive, c'est-à-dire ne présente pas d'éléments mécaniques subdivisant l'écoulement à l'approche de la voie de sortie de l'effluent clarifié. Il n'y a donc pas de lamelles dans la zone de décantation. Des éléments de répartition tels que cloisons ou goulottes de renvoi peuvent bien entendu être prévus à des fins de régulation hydraulique, en fonction de la géométrie de la zone de décantation.

La chambre de décantation est pourtant dimensionnée par rapport à un débit nominal d'eau à traiter Q, en sorte que la "vitesse au miroir" Vm soit dans cette chambre d'au moins 15 m/h, de préférence d'au moins 35 m/h.

En d'autres termes, la chambre de décantation a une section horizontale S telle que :

$$Q/S > 15 \text{ m/h}$$

Le coagulant est de tout type connu approprié (par exemple chlorure ferrique ou sulfate d'aluminium).

La zone intermédiaire est ici formée de deux chambres en série : une chambre de floculation 11B dans laquelle débouchent la voie secondaire 14 d'arrivée d'agent floculant et la voie secondaire 15 d'arrivée de matériau granulaire, et une zone de maturation 18.

En variante non représentée, la zone de maturation comporte une voie secondaire connectée à la source 14A, permettant un ajout complémentaire d'agent floculant.

Cet agent floculant est de tout type connu approprié (notamment polyélectrolyte, de type anionique et/ou cationique).

En variante non représentée, la voie secondaire 15 d'arrivée de matériau granulaire débouche dans la zone 11A, ou même dans la chambre 18, voire dans plusieurs des chambres 11A, 11B et 18. Il est préférable que ce matériau granulaire soit injecté dans la chambre 11A et/ou dans la chambre 11B.

Les chambres 11A et 11B sont ici de tailles similaires, au sein d'une batterie 11.

Chacune des chambres 11B et 18 comporte un agitateur, le gradient de vitesse étant en principe maximum dans la zone de floculation. La chambre 11B comporte ainsi un agitateur 17 adapté, grâce à un moteur non représenté, à générer des gradients de vitesse compris entre 100 et 450 $s^{-1}$, de préférence entre 200 et 250 $s^{-1}$, tandis que la chambre 18 comporte un agitateur 19 adapté, grâce à son moteur 20, à générer des gradients de vitesse compris entre 70 et 300 $s^{-1}$, de préférence entre 150 et 200 $s^{-1}$.

Le matériau granulaire est de préférence du sable (facile à obtenir et peu coûteux) de taille moyenne comprise entre 20 et 300 μm environ, de préférence entre 80 et 200 μm.

Les figures 2 et 3 représentent une variante de réalisation de l'invention. On y voit une installation 30 dont les éléments analogues à ceux de la figure 1 ont des numéros de référence qui s'en déduisent par addition du nombre 20.

La principale différence vis à vis de la figure 1 est que, si les zones de coagulation et de floculation sont comme précédemment à l'extérieur de la zone 41, la zone de maturation 38 est par contre au centre de cette zone 41 de décantation en communiquant avec la zone de floculation par un tube (ou une goulotte) descendant 45' ; en face de la sortie de ce tube est prévue une cloison 46' destinée à forcer une circulation vers la bas de la masse fluide, jusqu'au fond de la chambre de maturation 38.

La masse fluide sort de cette chambre intermédiaire par surverse.

Pour éviter qu'une partie de la masse fluide ne parte directement vers la voie de sortie 42, une cloison tubulaire 47' est prévue autour de la chambre intermédiaire en ayant son bord supérieur qui arrive plus haut que le niveau normal de la masse fluide dans la chambre de décantation.

Le fond conique de cette chambre de décantation est ici sans racleur, ce qui est rendu possible par l'inclinaison importante (supérieure typiquement à 55°) donnée à ce fond.

La configuration de ces figures 2 et 3 a, par rapport à celle de la figure 1, l'avantage de pouvoir s'adapter de manière plus compacte à un ouvrage existant et de permettre une meilleure répartition dans la zone de décantation.

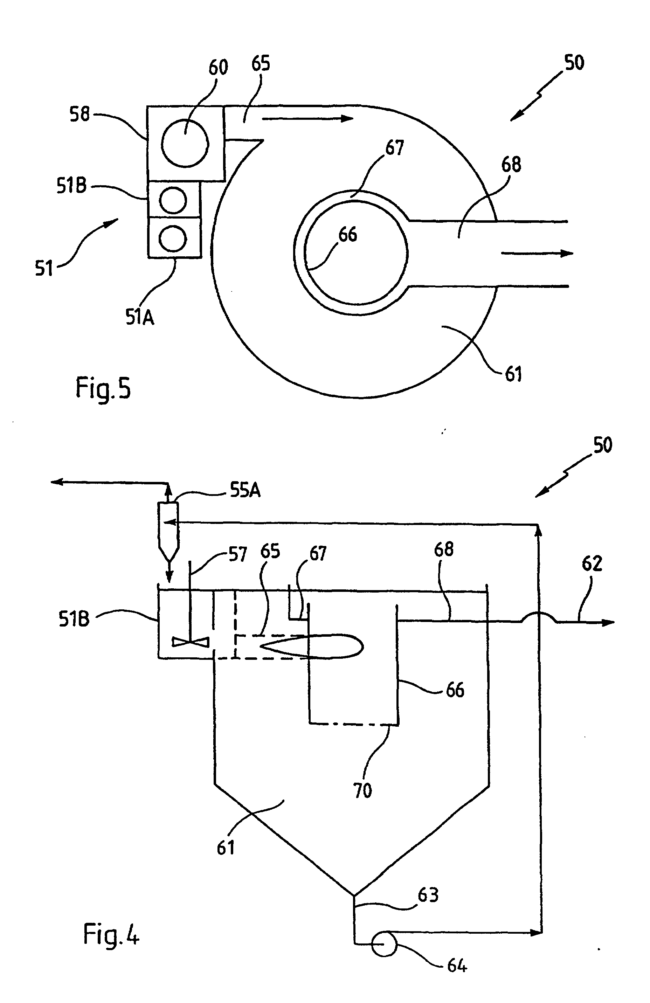

Les figures 4 et 5 représentent une autre variante de réalisation de l'invention. On y voit une installation 50 dont les éléments analogues à ceux de la figure 1 ont des numéros de référence qui s'en déduisent par addition du nombre 40.

La principale différence vis à vis de la figure 1 réside dans le fait que la sortie de la chambre de maturation 58 est un tube 65 qui débouche latéralement dans la chambre de décantation 61, à l'écart de, et transversalement à son axe vertical de symétrie. Plus précisément, le tube 65 débouche avantageusement tangentiellement à la paroi latérale de la chambre 61, ce qui provoque un effet de cyclone ou vortex qui contribue à accélérer la décantation.

Au centre de la chambre est prévue une paroi tubulaire 66 sans fond au sommet de laquelle déborde par surverse de l'eau clarifiée qui est recueillie par une rigole annulaire 67 raccordée à une goulotte d'évacuation 68. En variante, la paroi tubulaire 66 a un fond schématisé par la ligne mixte 70, isolant hydrauliquement l'intérieur de cette paroi vis à vis du reste du décanteur, et c'est vers l'intérieur de cette paroi que déborde par surverse de l'eau clarifiée avant de s'évacuer par la goulotte 62 qui, dans ce *cas,* part directement de l'intérieur de cette paroi.

L'existence de deux chambres successives dans la zone intermédiaire des figures 1 à 5 s'explique par le fait qu'il est apparu que, dans le cas d'eaux chargées en matière organique colloïdale, un mode préféré de formation du floc pour obtenir une eau décantée de meilleure qualité consiste à injecter en tête de préparation l'agent coagulant destiné à déstabiliser la solution colloïdale (usuellement un sel de métal à valence élevée ou un polymère cationique), mélangé à l'eau brute par agitation ou par mélange statique. C'est après ce premier mélange déstabilisant que le polyélectrolyte floculant est injecté dans la zone de floculation agitée à gradient de vitesse assez élevé (entre 100 et 450 $s^{-1}$, préférentiellement vers 200 $s^{-1}$ environ), permettant aux microflocs résultant de la coagulation de se rencontrer et d'emprisonner des particules de matériau granulaire maintenues en suspension.

Enfin, le mélange d'eau et de floc est introduit dans la chambre de maturation, agitée avec un gradient de vitesse d'environ 70 à 300 $s^{-1}$ environ, préférentiellement de l'ordre de 150 $s^{-1}$ environ. Dans la chambre de maturation, les flocs s'agrègent jusqu'à atteindre une taille optimum comprise, suivant la qualité d'eau entrante, entre 0,5 et 2,5 mm environ. Le temps de séjour dans la zone de coagulation peut être très faible, dépendant principalement de la qualité de mélange assurée dans cette zone (temps usuellement compris entre quelques secondes et 3 minutes voire plus (jusqu'à 10 minutes), préférentiellement 30 secondes à 1,5 minute au débit de pointe).

Le temps de séjour dans la zone de floculation est avantageusement compris entre 0,5 et 4 minutes voire plus, jusqu'à 10 minutes (préférentiellement 1,5 à 2 minutes au débit de pointe) ; ; le temps de séjour dans la zone de maturation est compris entre 2 et 8 minutes voire plus, jusqu'à 15 minutes (préférentiellement 3 à 6 minutes au débit de pointe à traiter).

On appréciera que la non-utilisation de lamelles dans la zone de décantation permet de s'affranchir des contraintes d'installation de ces lamelles. C'est ainsi notamment que l'on peut choisir une forme ronde pour les chambres de décantation.

L'invention combine une préparation dans une série d'au moins 2 chambres (floculation et maturation, si la coagulation est préalablement réalisée en ligne) et préférentiellement 3 chambres (coagulation, floculation, maturation comme dans les exemples précités) ces cuves étant rectangulaires ou cylindriques, à une décantation simple dans une cuve rectangulaire ou cylindrique, en fonction des contraintes d'implantation ou de génie civil.

Le mode de réalisation sans lamelles des figures 4 et 5 combine la préparation physico-chimique du floc lesté décrite ci-dessus avec une décantation améliorée dans un décanteur de type cyclone ou vortex.

Ce type de décanteur a été testé en décantation naturelle et permet, sans recours aux lamelles, d'augmenter les vitesses au miroir possibles : son utilisation en combinaison avec une préparation physico-chimique soignée d'un floc lesté dense telle que décrite ci-dessus permet d'augmenter les performances de décantation par rapport à une décantation simple.

Une installation pilote a été réalisée de la manière suivante :

- cuve de floculation : 4 $m^3$ fortement agités (~50 W/$m^3$, soit un gradient de vitesse d'environ 220 $s^{-1}$) dans lesquels on injecte du chlorure ferrique,
- cuve d'injection : 4 $m^3$ également fortement agités (~ 50 W/$m^3$, soit un gradient de vitesse d'environ 220 $s^{-1}$) dans lesquels on injecte un polymère anionique et du sable de diamètre 130 $\mu$m issu de la sous-verse d'un hydrocyclone séparant les boues extraites du sable en recirculation ;
- cuve de maturation : 15 $m^3$ agités plus lentement (~ 35 W/$m^3$, soit un gradient de vitesse d'environ 190 $s^{-1}$) ;
- cuve de décantation : section rectangulaire de 1,94 x 1,1 = 2,1 $m^2$ (surface au miroir) sur une hauteur de 1,5 m alimentée frontalement par le bas et équipée d'une trémie pyramidale avec soutirage par chasse des boues et du sable ;
- récupération de l'eau traitée par une goulotte centrale de 0,5 m de large.

Le tableau suivant donne les résultats de deux essais :

|  | ESSAI 1 | ESSAI 2 |
|---|---|---|
| Débit | 100 $m^3$/h | 200 $m^3$/h |
| Dose de chlorure ferrique | 60 mg/l (produit pur) | 60 mg/l (produit pur) |

(suite)

|  | ESSAI 1 | ESSAI 2 |
|---|---|---|
| Temps de coagulation | 2,6 minutes | 1,3 minutes |
| Dose de polymère | 0,9 mg/l | 0,9 mg/l |
| Taux de sable | 8 kg/m$^3$ | 4,6 kg/m$^3$ |
| Temps d'injection | 2,6 minutes | 1,3 minutes |
| Temps de maturation | 9 minutes | 4,5 minutes |
| Vitesse au miroir | 45 m/h | 90 m/h |
| Taux de soutirage des boues | 10 % | 5 % |
| MES en entrée | 255 mg/l | 114 mg/l |
| MES en sortie | 31 mg/l | 30 mg/l |
| Rendement correspondant | 87,8 % | 73,7 % |

En fait l'essai 2 correspond, par rapport à l'essai 1, à un "fort" débit et une "faible" teneur en Matières En Suspension.

On remarque à l'examen de ce tableau que d'excellents rendements d'abattement des MES sont obtenus avec des vitesses au miroir considérables (de 45 et 90 m/h).

Il va de soi que la description qui précède n'a été proposée qu'à titre d'exemple non limitatif et que de nombreuses variantes peuvent être proposées par l'homme de l'art sans sortir du cadre de l'invention. C'est ainsi notamment que l'invention se généralise au traitement de tout autre liquide chargé en particules ou colloïdes, tel que par exemple les bains pour traitement de surface des métaux dans le domaine de la métallurgie.

## Revendications

1.   Procédé de traitement d'un écoulement brut liquide chargé en particules et/ou colloïdes selon lequel :

- on fait circuler cet écoulement brut dans une première zone (11A, 31A, 51A), dite zone de coagulation, que l'on maintient turbulente et dans laquelle on mélange à cet écoulement dans une proportion contrôlée un réactif coagulant,
- on fait circuler l'écoulement coagulé et un matériau granulaire ajouté dans une proportion contrôlée et qui est insoluble dans cet écoulement et plus dense que ce dernier, dans une seconde zone (11B, 18, 31B, 38, 51B, 58) dite zone intermédiaire dans laquelle on maintient des turbulences propres à maintenir ce matériau granulaire en suspension tandis que des colloïdes ou particules de l'écoulement s'agrègent autour des particules de ce matériau granulaire,
- on fait circuler l'écoulement, avec sensiblement tout le matériau granulaire ajouté et les colloïdes ou particules y agrégés, dans une troisième zone (21, 41, 61), dite zone de décantation où on sépare un effluent décanté et des boues constituées du matériau granulaire et des colloïdes agrégés,
- on recueille les boues, on en extrait le matériau granulaire pour le recycler en amont et on extrait les boues sans matériau granulaire,

  **caractérisé en ce que** le gradient de vitesse dans la zone intermédiaire est compris entre 70 et 450 s$^{-1}$, de préférence entre 150 et 250 s$^{-1}$, et **en ce que** la zone de décantation (21, 41, 61) dans laquelle on sépare l'effluent décanté et les boues est dépourvue de lamelles et on y fait circuler l'écoulement chargé en matériau granulaire et en matières agrégées à une vitesse de décantation d'au moins 15 m/h en moyenne.

2.   Procédé selon la revendication 1, **caractérisé en ce que** l'écoulement brut est de l'eau.

3.   Procédé selon la revendication 1 ou la revendication 2, **caractérisé en ce que** la vitesse de décantation est d'au moins 35 m/h.

4.   Procédé selon l'une quelconque des revendications 1 à 3, **caractérisé en ce que** le rendement d'abattement des matières en suspension est supérieur à 73,7 %.

5.   Procédé selon l'une quelconque des revendications 1 à 4, **caractérisé en ce que** le matériau granulaire est du sable fin.

6.  Procédé selon la revendication 5, **caractérisé en ce que** le sable a une taille moyenne de particules comprise entre 20 et 300 im environ, de préférence entre 100 et 200 im.

7.  Procédé selon l'une quelconque des revendications 1 à 5, **caractérisé en ce qu'**on injecte un agent floculant dans l'écoulement brut, dans une première partie de la zone intermédiaire dite zone de floculation (11B, 31B, 51B) que l'on maintient à l'état turbulent, le reste de la zone intermédiaire constituant une zone de maturation où se complète l'agrégation des particules et colloïdes.

8.  Procédé selon la revendication 7, **caractérisé en ce qu'**on injecte un complément d'agent floculant dans la zone de maturation.

9.  Procédé selon la revendication 7, **caractérisé en ce que** le matériau granulaire est au moins en partie injecté dans la zone de floculation.

10. Procédé selon l'une quelconque des revendications 7 à 9, **caractérisé en ce que** la zone de floculation est agitée avec un gradient de vitesse compris entre 100 $s^{-1}$ et 450 $s^{-1}$ environ, de préférence entre 200 $s^{-1}$ et 250 $s^{-1}$.

11. Procédé selon la revendication 10, **caractérisé en ce que** le gradient de vitesse dans la zone de maturation (18, 38, 58) est inférieur au gradient de vitesse dans la zone de floculation.

12. Procédé selon l'une quelconque des revendications 7 à 11, **caractérisé en ce que** le gradient de vitesse dans la zone de maturation est compris entre 70 et 300 $s^{-1}$, de préférence entre 150 et 200 $s^{-1}$.

13. Procédé selon l'une quelconque des revendications 1 à 12, **caractérisé en ce qu'**on génère dans la zone de décantation (61) un mouvement de cyclone ou vortex en injectant l'écoulement venant de la seconde zone d'un côté prédéterminé d'un axe vertical de symétrie de cette zone de décantation.

14. Procédé selon l'une quelconque des revendications 1 à 13, **caractérisé en ce que** la séparation entre matériau granulaire et boues est effectuée par hydrocyclonage, tamisage ou centrifugation.

15. Installation de traitement d'un écoulement brut liquide comportant en série :

    -   une première zone de coagulation (11A, 31A, 51A) munie d'une voie principale d'arrivée connectée à une source d'écoulement brut et d'une voie secondaire connectée à une source de réactif coagulant,
    -   des moyens d'agitation (16, 36, 56) dans cette zone de coagulation,
    -   une seconde zone (18, 11B, 38, 31A, 58, 51A) dite zone intermédiaire communiquant avec la première zone,
    -   de seconds moyens d'agitation (20, 40, 60) dans cette zone intermédiaire,
    -   une voie secondaire connectée à une source de matériau granulaire insoluble dans l'écoulement brut et plus dense que ce dernier, et débouchant dans la zone de coagulation ou dans la zone intermédiaire,
    -   une troisième zone (21, 41, 61) dite zone de décantation, communiquant avec la seconde zone et munie à sa partie supérieure d'une voie de sortie pour de l'effluent clarifié et à sa partie inférieure d'une voie d'évacuation de boues,
    -   une zone de séparation (15A, 35A, 55A) apte à récupérer le matériau granulaire dans les boues et munie d'une voie de sortie raccordée à la source de matériau granulaire,

    **caractérisée en ce que** les moyens d'agitation de la zone intermédiaire sont reliés à des moyens de mise en oeuvre aptes à la génération par ces moyens d'agitation de gradients de vitesse compris entre 70 et 450 $s^{-1}$, de préférence compris entre 150 et 250 $s^{-1}$ et **en ce que** la zone de décantation est dépourvue de lamelles et est dimensionnée, compte tenu d'une valeur prédéterminée de débit d'entrée, en sorte que la vitesse au miroir y soit en moyenne d'au moins 15 m/h.

16. Installation de traitement selon la revendication 15, **caractérisée en ce que** la zone de décantation est dimensionnée en sorte que la vitesse au miroir y soit d'au moins 35 m/h.

17. Installation de traitement selon l'une des revendications 15 ou 16, **caractérisée en ce que** le rendement d'abattement des matières en suspension est supérieur à 73,7 %.

**18.** Installation de traitement selon l'une quelconque des revendications 15 à 17, **caractérisée en ce que** la zone intermédiaire comporte successivement une zone de floculation (11B, 31A, 51A) dans laquelle débouchent une voie d'arrivée d'écoulement coagulé et une voie secondaire d'arrivée connectée à une source d'agent floculant, puis une zone de maturation (18, 38, 58).

**19.** Installation de traitement selon la revendication 18, **caractérisée en ce que** la zone de maturation comporte une seconde voie d'arrivée d'agent floculant.

**20.** Installation de traitement selon l'une des revendications 18 ou 19, **caractérisée en ce que** la voie secondaire d'arrivée connectée dans la source de matériau granulaire débouche dans la zone de floculation.

**21.** Installation de traitement selon l'une quelconque des revendications 18 à 20, **caractérisée en ce que** les seconds moyens d'agitation dans ladite zone intermédiaire sont reliés à des moyens de mise en oeuvre aptes à la génération par ces seconds éléments d'agitation de gradients de vitesse compris, dans la zone de floculation, entre 100 s⁻¹ et 450 s⁻¹ environ, de préférence entre 200 et 250 s⁻¹ et dans la zone de maturation entre 70 et 300 s⁻¹ environ, et de préférence entre 150 et 200 s⁻¹.

**22.** Installation de traitement selon l'une quelconque des revendications 15 à 21, **caractérisée en ce que** la zone de décantation (21, 41, 61) est une chambre de section circulaire.

**23.** Installation de traitement selon l'une quelconque des revendications 15 à 22, **caractérisée en ce que** la zone de maturation (38) est une chambre disposée au centre de la zone de décantation.

**24.** Installation de traitement selon la revendication 23, **caractérisée en ce que** la zone de maturation i) est connectée en amont à un tube descendant (45), ii) contient une paroi (46) située devant la sortie de ce tube et destinée à être franchie par sous-verse, et iii) est entourée d'une paroi tubulaire (47) en saillie vers le haut, la voie de sortie (42) pour l'eau clarifiée partant de la zone supérieure de la zone de décantation à l'extérieur de cette paroi tubulaire.

**25.** Installation de traitement selon l'une quelconque des revendications 15 à 22, **caractérisée en ce que** la zone de maturation communique avec la zone de décantation par un tube (65) débouchant dans la zone de décantation à l'écart d'un axe vertical de symétrie de cette dernière, en sorte de générer un cyclone ou vortex.

**26.** Installation de traitement selon la revendication 25, **caractérisée en ce que** la zone de décantation (61) est circulaire et le tube (65) y débouche tangentiellement.

**27.** Installation de traitement selon la revendication 25 ou 26, **caractérisée en ce que** la zone de décantation (61) comprend en une position centrale une paroi tubulaire (66) communiquant avec une goulotte (68) d'évacuation d'effluent clarifié.

**28.** Installation de traitement selon la revendication 27, **caractérisée en ce que** la paroi tubulaire est sans fond et est bordée à sa partie supérieure par une rigole (67) communiquant avec la goulotte (68).

**29.** Installation de traitement selon la revendication 27, **caractérisée en ce que** la paroi tubulaire a un fond (70) isolant hydrauliquement l'intérieur de cette paroi tubulaire vis à vis du reste du décanteur, et communiquant avec la goulotte d'évacuation.

**30.** Installation de traitement selon l'une quelconque des revendications 15 à 29, **caractérisée en ce que** la zone de séparation comporte au moins un hydrocyclone, un tamis ou une centrifugeuse ou moyen équivalent de séparation sable/boues.

**Patentansprüche**

**1.** Verfahren zur Behandlung einer flüssigen Rohströmung, die mit Teilchen und/oder Kolloiden beladen ist. bei dem man:

- diese Rohzuströmung in einer als Koagulierungszone bezeichneten, ersten Zone (11A, 31A, 51A) umlaufen läßt, die man turbulent hält und in der man dieser Strömung ein Koagulierungsmittel in einem kontrollierten Verhältnis zugibt,

- die koagulierte Strömung und ein körniges Material, das in einem kontrollierten Verhältnis zugegeben wird und das in dieser Strömung unlöslich sowie dichter als letzlere ist, in einer als Zwischenzone bezeichneten zweiten Zone (11B, 18, 31B, 38, 51B, 58) umlaufen läßt, in der man Turbulenzen aufrechterhält, die dazu geeignet sind, das kömige Material in Suspension zu halten, während Kolloide oder Teilchen aus der Strömung sich um die Teilchen dieses körnigen Materials anlagern,

- diese Strömung mit im wesentlichen dem gesamten zugegebenen körnigen Material und den an diesem angelagerten Kolloiden oder Teilchen in einer als Dekantierzone bezeichneten dritten Zone (21, 41, 61) umlaufen läßt, in der man dekantiertes Abwasser und Schlamm, der aus körnigem Material und angelagerten Kolloiden besteht, abscheidet,

- den Schlamm auffängt, daraus das körnige Material abzieht, um es stromaufwärts wieder zuzuführen, und den Schlamm ohne körniges Material abzieht,

**dadurch gekennzeichnet, daß** der GeschvAndigkeitsgradient in der Zwischenzone im Bereich von 70 bis 450 s$^{-1}$, vorzugsweise im Bereich von 150 bis 250 s$^{-1}$, liegt und daß die Dekantierzone (21, 41, 61). in der man das dekantierte Abwasser und den Schlamm abscheidet, keine Lamellen aufweist, und man dort die mit körnigem Material und angelagerten Materialien beladene Strömung mit einer Dekantiergeschwindigkeit von durchschnittlich mindestens 15 m/h umlaufen läßt.

2. Verfahren nach Anspruch 1, **dadurch gekennzeichnet, daß** es sich bei der Rohströmung um Wasser handelt.

3. Verfahren nach Anspruch 1 oder Anspruch 2, **dadurch gekennzeichnet, daß** die Dekantiergeschwindigkeit mindestens 35 m/h beträgt.

4. Verfahren nach einem der Ansprüche 1 bis 3, **dadurch gekennzeichnet, daß** die Austragleistung an suspendierten Materialien mehr als 73,7 % beträgt.

5. Verfahren nach einem der Ansprüche 1 bis 4, **dadurch gekennzeichnet, daß** das körnige Material Feinsand ist.

6. Verfahren nach Anspruch 5, **dadurch gekennzeichnet, daß** der Sand eine mittlere Teilchengröße im Bereich von etwa 20 bis etwa 300 μm, vorzugsweise von 100 bis 200 μm, aufweist.

7. Verfahren nach einem der Ansprüche 1 bis 5, **dadurch gekennzeichnet, daß** man ein Flockungsmittel in einem als Flockungszone (11B, 31B, 51B) bezeichneten ersten Teil der Zwischenzone, den man in einem turbulenten Zustand hält, in die Rohströmung einspritzt, wobei der Rest der Zwischenzone eine Reifungszone bildet, in der die Aggregation der Teilchen und Kolloide abgeschlossen wird.

8. Verfahren nach Anspruch 7, **dadurch gekennzeichnet, daß** man in der Reifungszone einen Flockungsmittelzusatz einspritzt.

9. Verfahren nach Anspruch 7, **dadurch gekennzeichnet, daß** das körnige Material zumindest teilweise in die Flockungszone eingespritzt wird.

10. Verfahren nach einem der Ansprüche 7 bis 9, **dadurch gekennzeichnet, daß** die Flockungszone mit einem Geschwindigkeitsgradienten im Bereich von etwa 100 s$^{-1}$ bis etwa 450 s$^{-1}$, vorzugsweise von 200 s$^{-1}$ bis 250 s$^{-1}$, gerührt wird.

11. Verfahren nach Anspruch 10, **dadurch gekennzeichnet, daß** der Geschwindigkeitsgradient in der Reifungszone (18, 38, 58) niedriger als der Geschwindigkeitsgradient in der Flockungszone ist.

12. Verfahren nach einem der Ansprüche 7 bis 11, **dadurch gekennzeichnet, daß** der Geschwindigkeitsgradient in der Reifungszone im Bereich von 70 bis 300 s$^{-1}$, vorzugsweise von 150 bis 200 s$^{-1}$, liegt.

13. Verfahren nach einem der Ansprüche 1 bis 12, **dadurch gekennzeichnet, daß** man in der Dekantierzone (61) eine Zyklon- oder Spiral-Bewegung erzeugt, indem man die aus der zweiten Zone kommende Strömung von einer vorbestimmten Seite einer vertikalen Symmetrieachse dieser Dekantierzone einspritzt.

14. Verfahren nach einem der Ansprüche 1 bis 13, **dadurch gekennzeichnet, daß** die Abscheidung zwischen dem kömigen Material und dem Schlammn durch Hydrozyklonaufbereitung, Sieben oder Zentrifugieren erfolgt.

**15.** Anlage zur Behandlung einer flüssigen Rohströmung, wobei die Anlage nacheinander folgendes umfaßt:

- eine erste Zone als Koagulierungszone (11A, 31A, 51A), die mit einer Hauptzuführleitung, welche mit einer Rohströmungsquelle verbunden ist, und mit einer Nebenleitung versehen ist, die an eine Koagulierungsmittel-Quelle angeschlossen ist,
- Rührmittel (16, 36, 56) in dieser Koagulierungszone,
- eine als Zwischenzone bezeichnete zweite Zone (18, 11B, 38, 31A, 58, 51A), die mit der ersten Zone in Verbindung steht,
- zweite Rührmittel (20, 40, 60) in dieser Zwischenzone,
- eine sekundäre Leitung, die mit einer Quelle für körniges Material das in der Rohströmung unlöslich und dichter als letztere ist, verbunden ist und in die Koagulierungszone oder in die Zwischenzone einmündet.
- eine als Dekantierzone bezeichnete dritte Zone (21, 41, 61), die in Verbindung mit der zweiten Zone steht und an ihrem oberen Teil mit einer Auslaßleitung für geklärtes Abwasser sowie an ihrem unteren Teil mit einer Schlammabzugsleitung versehen ist,
- eine Abscheidungszone (15A, 35A, 55A), die dazu dient, das kömige Material aus dem Schlammn zurückzugewinnen, und die mit einer Auslaßleitung versehen ist, die mit der Quelle für körniges Material verbunden ist,

**dadurch gekennzeichnet, daß** die Rührmittel der Zwischenzone an Betätigungsmittel angeschlossen sind, die zur Erzeugung von Geschwindigkeitsgradienten im Bereich von 70 bis 450 s$^{-1}$, vorzugsweise im Bereich von 150 bis 250 s$^{-1}$, durch diese Rührmittel eingerichtet sind, und daß die Dekantierzone keine Lamellen aufweist sowie unter Berücksichtigung eines vorbestimmten Wertes für den Eingangsdurchsatz so bemessen ist, daß die Geschwindigkeit am Flüssigkeitsspiegel darin durchschnittlich mindestens 15 m/h beträgt.

**16.** Behandlungsanlage nach Anspruch 15, **dadurch gekennzeichnet, daß** die Dekantierzone so bemessen ist, daß die Geschwindigkeit am FlüssigKeitsspiegel darin mindestens 35 m/h beträgt.

**17.** Behandlungsanlage nach einem der Ansprüche 15 oder 16, **dadurch gekennzeichnet, daß** die Austragleistung an suspendierten Materialien mehr als 73,7 % beträgt.

**18.** Behandlungsanlage nach einem der Ansprüche 15 bis 17, **dadurch gekennzeichnet, daß** die Zwischenzone nacheinander eine Flockungszone (11B, 31A, 51A), in die eine Zuführleitung für koagulierte Strömung und eine an eine Flockungsmittelquelle angeschlossene sekundäre Zuführleitung einmünden, und danach eine Reifungszone (18, 38, 58) umfaßt.

**19.** Behandlungsanlage nach Anspruch 18, **dadurch gekennzeichnet, daß** die Reifungszone eine zweite Zuführleitung für Flockungsmittel umfaßt.

**20.** Behandlungsanlage nach einem der Ansprüche 18 oder 19, **dadurch gekennzeichnet, daß** die sekundäre Zuführleitung. die mit der Quelle für körniges Material verbunden ist, in die Flockungszone einmündet.

**21.** Behandlungsanlage nach einem der Ansprüche 18 bis 20, **dadurch gekennzeichnet, daß** die zweiten Rührmittel in der Zwischenzone mit Betätigungsmltteln verbunden sind, die zur Erzeugung von Geschwindigkeitsgradienten durch diese zweiten Rührelemente eingerichtet sind, welche in der Flockungszone im Bereich von etwa 100 s$^{-1}$ bis etwa 450 s$^{-1}$, vorzugsweise von 200 bis 250 s$^{-1}$, und in der Reifungszone zwischen etwa 70 und etwa 300 s$^{-1}$, vorzugsweise zwischen 150 und 200 s$^{-1}$, liegen.

**22.** Behandlungsanlage nach einem der Ansprüche 15 bis 21, **dadurch gekennzeichnet, daß** die Dekantierzone (21, 41, 61) eine Kammer mit kreisförmigem Querschnitt ist.

**23.** Behandlungsanlage nach einem der Ansprüche 15 bis 22, **dadurch gekennzeichnet, daß** die Reifungszone (38) eine in der Mitte der Dekantierzone angeordnete Kammer ist.

**24.** Behandlungsanlage nach Anspruch 23, **dadurch gekennzeichnet, daß** die Reifungszone i) stromabwärts mit einem Fallrohr (45) verbunden ist, ii) eine Wand (46) enthält, die vor dem Auslaß dieses Rohrs liegt und dazu dient, durch Überlauf überwunden zu werden, und iii) von einer rohrförmigen Wand (47) umgeben ist, die nach oben ragt, wobei die Auslaßleitung (42) für das geklärte Wasser vorn oberen Bereich der Dekantierzone zur Außenseite dieser rohrförmigen Wand verläuft.

25. Behandlungsanlage nach einem der Ansprüche 15 bis 22, **dadurch gekennzeichnet, daß** die Reifungszone mit der Dekantierzone über ein Rohr (65) verbunden ist, das in die Dekantierzone in einem Abstand von einer vertikalen Symmetrieachse dieser letzteren einmündet, um einen Zyklon oder einen Spiralwirbel zu erzeugen.

26. Behandlungsanlage nach Anspruch 25, **dadurch gekennzeichnet, daß** die Dekantierzone (61) kreisförmig ist und das Rohr (65) tangential in diese einmündet.

27. Behandlungsanlage nach Anspruch 25 oder 26, **dadurch gekennzeichnet, daß** die Dekantierzone (61) an einer zentralen Position eine rohrförmige Wand (66) aufweist, die mit einem Ablauf (68) zum Abziehen von geklärtem Abwasser in Verbindung steht.

28. Behandlungsanlage nach Anspruch 27, **dadurch gekennzeichnet, daß** die rohrförmige Wand keinen Boden hat und an ihrem oberen Abschnitt von einer Rinne (67) eingefaßt wird, die mit dem Ablauf (68) in Verbindung steht.

29. Behandlungsanlage nach Anspruch 27, **dadurch gekennzeichnet, daß** die rohrförmige Wand einen Boden (70) aufweist, der das Innere dieser rohrförmigen Wand gegenüber dem Rest des Dekanters hydraulisch isoliert und in Verbindung mit dem Ablauf steht.

30. Behandlungsanlage nach einem der Ansprüche 15 bis 29, **dadurch gekennzeichnet, daß** die Abscheidungszone mindestens einen Hydrozyklon, ein Sieb oder eine Zentrifuge oder ein äquivalentes Mittel zum Abscheiden von Sand/Schlamm umfaßt.

**Claims**

1. Method of treating an untreated flow of liquid charged with particles and/or colloids wherein:

   - said untreated flow is caused to flow in a first or coagulation zone (11A, 31A, 51A) that is kept turbulent and in which said flow is mixed in controlled proportions with a coagulant reagent,
   - the coagulated flow and a granular material added in controlled proportions and which is insoluble in and more dense than said flow are caused to flow in a second or intermediate zone (11B, 18, 31B, 38, 51B, 58) in which turbulence is maintained in order to maintain said granular material in suspension while colloids or particles in the flow aggregate around particles of said granular material,
   - the flow with substantially all of the added granular material and the colloids or particles aggregated therein is caused to flow in a third or sedimentation zone (21, 41, 61) in which a clarified effluent is separated from sludge consisting of the granular material and the aggregated colloids,
   - the sludge is collected, the granular material is extracted from it to recycle it and the sludge is extracted without granular material,

   **characterized in that** the speed gradient in the intermediate zone is from 70 s$^{-1}$ to 450 s$^{-1}$, preferably from 150 s$^{-1}$ to 250 s$^{-1}$, and **in that** the sedimentation zone (21, 41, 61) in which the clarified effluent and the sludge are separated has no separator plates and the flow laden with granular material and with aggregated material is caused to flow therein at an average settling speed of at least 15 m/h.

2. Method according to claim 1 **characterized in that** the untreated flow is effluent.

3. Method according to claim 1 **characterized in that** the settling speed is at least 35 m/h.

4. Method according to any of claims 1 to 3 **characterized in that** the yield of materials in suspension is greater than 73.7%.

5. Method according to any of claims 1 to 4, **characterized in that** the granular material is fine sand.

6. Method according to claim 5 **characterized in that** the mean particle size of the sand is from approximately 20 µm to approximately 300 µm, preferably from 100 µm to 200 µm.

7. Method according to any of claims 1 to 5 **characterized in that** a flocculant agent is fed into the untreated flow in a first part of the intermediate or flocculation zone (11B, 31B, 51B) which is kept turbulent, the remainder of the intermediate zone constituting a maturation zone in which aggregation of the particles and colloids is completed.

8. Method according to claim 7 **characterized in that** further flocculant agent is fed into the maturation zone.

9. Method according to claim 7 **characterized in that** at least some of the granular material is fed into the flocculation zone.

10. Method according to any of claims 7 to 9 **characterized in that** the flocculation zone is stirred with a speed gradient from approximately 100 s$^{-1}$ to approximately 450 s$^{-1}$, preferably from 200 s$^{-1}$ to 250 s$^{-1}$.

11. Method according to claim 10 **characterized in that** the speed gradient in the maturation zone (18, 38, 58) is less than the speed gradient in the flocculation zone.

12. Method according to any of claims 7 to 11 **characterized in that** the speed gradient in the maturation zone is from 70 s$^{-1}$ to 300 s$^{-1}$, preferably from 150 s$^{-1}$ to 200 s$^{-1}$.

13. Method according to any of claims 1 to 12 **characterized in that** a cyclone or vortex is generated in the sedimentation zone (61) by feeding the flow from the second zone from a predetermined side of a vertical axis of symmetry of said sedimentation zone.

14. Method according to any of claims 1 to 13 **characterized in that** the granular material is separated from the sludge by hydrocycloning, screening or centrifuging.

15. Installation for treating an untreated flow of liquid, including in series:

    - a first coagulation zone (11A, 31A, 51A) having a main entry channel connected to a source of untreated flow and a secondary channel connected to a source of coagulant reagent,
    - stirrer means (16, 36, 56) in said coagulation zone,
    - a second or intermediate zone (18, 11B. 38, 31A, 58, 51A) communicating with the first zone,
    - second stirrer means (20, 40, 60) in said intermediate zone,
    - a secondary channel connected to a source of granular material that is insoluble in and more dense than said untreated flow, discharging into the coagulation zone or into the intermediate zone,
    - a third or sedimentation zone (21, 41, 61) communicating with the second zone and having in its upper part an outlet channel for clarified effluent and in its lower part a sludge removal channel,
    - a separation zone (15A, 35A, 55A) adapted to recover the granular material in the sludge and having an outlet channel connected to the source of granular material,

    **characterized in that** the stirrer means of the intermediate zone are connected to means adapted to generate by means of the stirrer means speed gradients from 70 s$^{-1}$ to 450 s$^{-1}$, preferably from 150 s$^{-1}$ to 250 s$^{-1}$, and **in that** the sedimentation zone has no separator plates and dimensions, given a predetermined inlet flowrate value, such that the average mirror speed therein is at least 15 m/h.

16. Treatment installation according to claim 15 **characterized in that** the sedimentation zone has dimensions such that the mirror speed therein is at least 35 m/h.

17. Treatment installation according to either of claims 15 and 16 **characterized in that** the yield of materials in suspension is greater than 73.7%.

18. Treatment installation according to any of claims 15 to 17 **characterized in that** the intermediate zone includes a flocculation zone (11B, 31A, 51A) into which a coagulated flow inlet channel and a secondary inlet channel connected to a source of flocculant agent discharge, followed by a maturation zone (18, 38, 58).

19. Treatment installation according to claim 18 **characterized in that** the maturation zone includes a flocculant agent inlet second channel.

20. Treatment installation according to either of claims 18 and 19 **characterized in that** the secondary inlet channel connected to the source of granular material discharges into the flocculation zone.

21. Treatment installation according to any of claims 18 to 20 **characterized in that** the second stirrer means in said intermediate zone are connected to means adapted to generate by means of said second stirrer means speed gradients in the flocculation zone from approximately 100 s$^{-1}$ to approximately 450 s$^{-1}$, preferably from 200 s$^{-1}$ to 250 s$^{-1}$, and speed gradients in the maturation zone from approximately 70 s$^{-1}$ to approximately 300 s$^{-1}$, preferably from 150 s$^{-1}$ to 200 s$^{-1}$.

22. Treatment installation according to any of claims 15 to 21 **characterized in that** the sedimentation zone (21, 41, 61) is a circular cross-section chamber.

23. Treatment installation according to any of claims 15 to 22 **characterized in that** the maturation zone (38) is a chamber at the centre of the sedimentation zone.

24. Treatment installation according to claim 23 **characterized in that** the maturation zone i) is connected at its entry end to a downwardly extending tube (45), ii) contains a wall (46) in front of the outlet of said tube and adapted to be crossed by underflow, and iii) is surrounded by an upwardly projecting tubular wall (47), the outlet channel (42) for clarified effluent extending from the upper zone of the sedimentation zone to the exterior of said tubular wall.

25. Treatment installation according to any of claims 15 to 22 **characterized in that** the maturation zone communicates with the sedimentation zone via a tube (65) discharging into the sedimentation zone away from a vertical axis of symmetry of the latter, so as to generate a cyclone or vortex.

26. Treatment installation according to claim 25 **characterized in that** the sedimentation zone (61) is circular and the tube (65) discharges therein tangentially.

27. Treatment installation according to claim 25 or 26 **characterized in that** the sedimentation zone (61) has in a central position a tubular wall (66) communicating with a clarified effluent removal trough (68).

28. Treatment installation according to claim 27 **characterized in that** the tubular wall has no bottom and is bordered in its upper part by a gutter (67) communicating with the trough (68).

29. Treatment installation according to claim 27 **characterized in that** the tubular wall has a bottom (70) hydraulically isolating the interior of said tubular wall from the remainder of the sedimentation device and communicating with the removal trough.

30. Treatment installation according to any of claims 15 to 29 **characterized in that** the separation zone includes at least one hydrocyclone, screen, centrifuge or equivalent sand/sludge separator means.

Fig.1

Fig.3

Fig. 2

Fig.5

Fig.4